(19)

**Europäisches Patentamt**

**European Patent Office**

**Office européen des brevets**

(11) **EP 4 627 924 A2**

(12) **EUROPEAN PATENT APPLICATION**

(43) Date of publication:
08.10.2025 Bulletin 2025/41

(21) Application number: 25196021.7

(22) Date of filing: 13.09.2020

(51) International Patent Classification (IPC):
*A01P 13/00* *(2006.01)*

(52) Cooperative Patent Classification (CPC):
(C-Sets available)
**A01N 43/40; A01N 43/42;** A01N 2300/00   (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2019   US 201962899753 P**

(62) Document number(s) of the earlier application(s) in accordance with Art. 76 EPC:
**20781635.6 / 4 027 790**

(71) Applicant: **Adama Agan Ltd.**
**7710201 Ashdod (IL)**

(72) Inventor: **KERGOAT, Pierre-Yves**
**75010 Paris (FR)**

(74) Representative: **Modiano, Gabriella Diana et al**
**Modiano & Partners SA**
**Steinsdorfstraße 14**
**80538 München (DE)**

Remarks:
This application was filed on 14.08.2025 as a divisional application to the application mentioned under INID code 62.

(54) **HERBICIDAL MIXTURES COMPRISING AMINOPYRALID AND QUINMERAC**

(57)   The present subject matter relates to a ternary synergistic herbicidal mixture for controlling undesired vegetation. The synergistic mixture comprises aminopyralid and quinmerac, or an ester or salt of any of the foregoing, or a combination thereof.

**EP 4 627 924 A2**

(52) Cooperative Patent Classification (CPC): (Cont.)

C-Sets
**A01N 43/40, A01N 43/42;**
**A01N 43/40, A01N 43/42, A01N 2300/00**

**Description**

RELATED APPLICATION/S

This application claims the benefit of priority of U.S. Provisional Patent Application No. 62/899,753 filed on 13 September 2019, the contents of which are incorporated herein by reference in their entirety.

PRESENT SUBJECT MATTER

The present subject matter relates to a herbicidal mixture for controlling undesired vegetation.

BACKGROUND OF THE PRESENT SUBJECT MATTER

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides.

Mixtures of selected herbicides have several advantages over the use of a single herbicide including (a) an increase in the spectrum of weeds controlled or an extension of weed control over a longer period of time, (b) an improvement in crop safety by using minimum doses of selected herbicides applied in combination rather than a single high dose of one herbicide, and (c) a delay in the appearance of resistant weed species to selected herbicides (Int. J. Agri. Biol., Vol. 6, No. 1, 2004, pages 209-212).

In crop protection, it is desirable to increase the selectivity and the reliability of the action of active compounds. It is therefore desirable to control the harmful plants effectively and, at the same time, protect the useful crops.

However, the activity and selectivity behavior of any specific mixture is difficult to predict since the behavior of each single herbicide in the mixture is often affected by the presence of the other(s) and the activity of the mixture may also vary considerably depending on chemical character, plant species, growth stage, and environmental conditions. Mostly, this practice results in reduced activity of the herbicides in the mixture.

Aminopyralid Amino-3,6-dichloropyridine-2-carboxylic acid was first reported by L. A. Brinkworth et al. (Proc. BCPC Int. Congr., Glasgow, 2005, 1, 43). Its manufacture and its herbicidal action was described in WO 2001/051468. Aminopyralid is a synthetic auxin which causes epinasty, followed by necrosis. It is a systemic, foliar and soil applied herbicide, which is rapidly absorbed by the leaves and roots.

Quinmerac 7-chloro-3-methyl-8-quinolinecarboxylic acid was first reported by B. Wuerzer et al. (Proc. Br. Crop Prot. Conf. - Weeds, 1985, 1, 63) and W. Nuyken *et al.* (*ibid.*, p. 71). Quinmerac induces the formation of 1-aminocyclopropane-1-carboxylic acid, leading to ethylene formation which induces the formation of abscisic acid (K. Grossmann & F. Scheltrup, Proc. Br. Crop Prot. Conf. - Weeds, 1995, 1, 393). It is taken up primarily via the roots, and in part also by the leaves. Quinmerac is used for post-emergence control of broad-leaved weeds in cereals, oilseed rape and sugar beet. The use of quinmerac as an herbicide is described in European patent EP 104389.

Aminopyralid is a highly effective post-emergence herbicide, in many cases it does not provide a sufficient control of the relevant harmful plants and its activity at low application rates is not always satisfactory. Further, it appears that aminopyralid is not sufficiently compatible with certain types of crop plants. As such, at the preferred application rates the useful crops are also damaged together with the undesired weeds.

Based on the aspects discussed above, there is a need in the art for herbicidal mixtures, which provide weed control comparable to the individual compounds with significantly reduced application rates. Further, there is a need to provide herbicidal mixtures, which provide significantly enhanced weed control with application rates comparable to or less than those of the individual compounds.

SUMMARY OF THE PRESENT SUBJECT MATTER

The present subject matter relates to a herbicidal mixture comprising aminopyralid and quinmerac, or an ester or salt of any of the foregoing, or a combination thereof.

The present subject matter also relates to a composition comprising a mixture of aminopyralid and quinmerac, or an ester or salt of any of the foregoing, or a combination thereof.

The present subject matter also relates to a synergistic herbicidal mixture comprising aminopyralid and quinmerac, or an ester or salt of any of the foregoing, or a combination thereof.

The present subject matter also relates to a method of controlling undesired vegetation comprising applying to a locus of the undesired vegetation a herbicidally effective amount of a mixture comprising aminopyralid and quinmerac, or an ester or salt of any of the foregoing, or a combination thereof. According to some embodiments, the mixture may be a synergistic mixture.

DETAILED DESCRIPTION OF THE PRESENT SUBJECT MATTER

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the phrase "agriculturally acceptable carrier" means carriers which are known and accepted in the art for the formation of formulations for agricultural or horticultural use.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. In yet another embodiment, the term "plant" may include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein the term "plant" includes reference to agricultural crops including, but not limited to, field crops, vegetable crops, fruits, semi-perennial crops and perennial crops.

As used herein, the term "locus" includes not only areas where weeds may already be growing, but also areas where weeds have yet to emerge, and also to areas under cultivation. Locus also includes the area surrounding the plant and the growing media of the plant, such as soil.

In the broadest sense, the term "weed" refers to plants which grow in locations in which they are not desired. In other words, a weed is a plant which is undesirable due to competition with the useful crop, for water, nutrients, sunlight, soil.

As used herein the term "ha" refers to hectare.

As used herein, the term "post-emergence," refers to the application of the herbicide composition to the weeds that have emerged from the soil. The term "pre-emergence" refers to the application of the herbicide composition to a habitat, a weed, or soil, prior to the emergence of the weeds from the soil.

As used herein, the term "mixture" or "combination" refers, but is not limited to, a combination in any physical form, e.g., blend, solution, suspension, dispersion, emulsion, alloy, granules, or the like.

As used herein, the term "control of undesirable vegetation" refers to the interference with the normal growth and development of undesired vegetation. Examples of control activity include, but are not limited to, inhibition of root growth, inhibition of shoot growth, inhibition of shoot emergence, inhibition of seed production, or reduction of weed biomass.

As used herein, the term "effective" when used to describe mixture, composition and a method for controlling of undesired pest means that the mixture, composition and a method provide a good level of control of the undesired pest.

As used herein, the term "effective amount" refers to an amount of the compound and/or mixture that, when applied, is sufficient to kill a weed. The "effective amount" will vary depending on the concentration, the type of plants(s), the severity of the weed infestation, the result desired, and the life stage of the weeds during treatment etc. Therefore, it is not always possible to specify a specific "effective amount." However, a suitable "effective amount" may be determined by one of ordinary skill in the art.

As used herein, the term "broad spectrum" is used to describe efficiency against a wide range of weeds, the locus thereof or propagation material thereof.

As used herein, the term "tank mix" means that aminopyralid and quinmerac are mixed in a tank prior to the application.

As used herein, the term "cultivated plants" includes plants which have been modified by breeding, mutagenesis or genetic engineering. Genetically modified plants are plants, which their genetic material has been modified by the use of recombinant DNA techniques. Typically, one or more genes have been integrated into the genetic material of such a plant in order to improve certain properties of the plant.

The term "plant health" comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), improved visual appearance and composition of the plant (*i.e.*, improved color, density, uniformity, compactness, dimensions), reduced ethylene (reduced production and/or inhibition of reception), increase in plant height, bigger leaf blade, less dead basal leaves, stronger tillers, greener leaf color, pigment content, photosynthetic activity, improved visual appearance and composition of harvested material (*i.e.*, seeds, fruits, leaves, vegetables, shoot/stem/cane), less input needed (such as fertilizers or water), improved carbohydrate content (*i.e.*, increased quantities of sugar and/or starch, improved sugar acid ratio, reduction of reducing sugars, increased rate of development of sugar), less seeds needed, more productive tillers, earlier flowering, early grain maturity, less plant verse (lodging), increased shoot growth, enhanced plant vigor, improved nutritional value, reduction in anti-nutritional compounds, increased nutrient uptake, stronger and healthier roots, improved organoleptic properties (*i.e.*, improved taste), improved consumer health benefits (*i.e.*, increased levels of vitamins and antioxidants), improved post-harvest characteristics (*i.e.*, enhanced appearance, shelf-life and/or storage stability, easier processability, easier extraction of compounds), improved seed quality (*i.e.*, for use in following seasons), increased plant stand and early and better germination; or any other advantages familiar to a person skilled in the art.

As used herein, the term "adjuvant" is broadly defined as any substance that itself is not an active ingredient but which enhances or is intended to enhance the effectiveness of the pesticide with which it is used. Adjuvants may be understood to include, spreading agents, penetrants, compatibility agents, and drift retardants.

As used herein, the term "agriculturally acceptable inert additives" is defined as any substance that itself is not an active ingredient but is added to the composition such as thickening agents, sticking agents, surfactants, synergists, anti-oxidation agent, anti-foaming agents and thickeners.

It is understood that where a parameter range is provided, all integers within that range, and tenths thereof, are also provided by the invention. For example, "1% to 90%" includes 1.0%, 1.1%, 1.2%, 1.3%, 1.4% etc. up to 90%.

The term "a" or "an" as used herein includes the singular and the plural, *unless specifically stated* otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of."

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the terms "approximately" or "about."

Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the terms "approximately" or "about" herein specifically includes $\pm 10\%$ from the indicated values in the range. In addition, the endpoints of all ranges directed to the same component or property herein are inclusive of the endpoints, are independently combinable, and include all intermediate points and ranges.

Herbicidal Mixture

It has been surprisingly found that by combining herbicides having different modes of action, i.e. aminopyralid which causes epinasty, followed by necrosis and quinmerac which induces formation of 1-aminocyclopropane-1-carboxylic acid, leading to ethylene formation which induces the formation of abscisic acid, herbicidal mixtures that exhibit a broad spectrum of control and high efficacy are produced.

In some embodiments, the combination provides a higher herbicidal activity than that envisaged on the basis of the sum of activities of each of the herbicides found therein. Such a combination allows the reduced dosages of the individual herbicides which can damage agriculturally important plants.

Thus, an enhanced, synergistic herbicidal activity is observed when a herbicidal mixture comprising, as active components a) aminopyralid; and b) quinmerac is used for the control of unwanted weeds.

The present subject matter relates to a herbicidal mixture comprising aminopyralid and quinmerac, or an ester or salt of any of the foregoing, and/or a combination thereof.

In one embodiment, the present subject matter relates to a synergistic herbicidal mixture of aminopyralid and quinmerac, or an ester or salt of any of the foregoing, and/or a combination thereof.

It has been found that the combination of aminopyralid with quinmerac resulted in surprising and unexpected advantages. It was found that the combination of a aminopyralid with quinmerac resulted in an enhancement of the efficacy. It was also found that the addition of aminopyralid to quinmerac provided a delay in resistance development.

Due to the resistance reducing properties of a mixture of aminopyralid and quinmerac, a second application of the individual herbicides during a crop season may be applied, thereby providing a further tool in combating the undesired vegetation.

The weight ratio between aminopyralid and quinmerac cannot generally be defined, as it varies depending upon various conditions such as the type of the formulation, weather conditions, the type of crop and the type of pests.

In the mixture of the present subject matter, the relative weight ratio of aminopyralid to quinmerac is preferably in the range from 1:500 to 500:1, in particular in the range from 1:250 to 250:1 and more preferably from 100:1 to 1:100. Accordingly, in the methods and uses of the invention, aminopyralid and quinmerac are applied within these weight ratios.

In one embodiment, the weight ratio of aminopyralid to quinmerac is from about 1:0.1 to 1:100. In a further embodiment, the weight ratio of aminopyralid to quinmerac is from about 1:5 to 1:50. In yet another embodiment, the weight ratio of aminopyralid to quinmerac is from about 1:10 to 1:40. In a specific embodiment, the weight ratio of aminopyralid to quinmerac is about 1:30.

The abovementioned weight ratio may be an intermediate range selected from the above indicated ratios.

The present subject matter further relates to a composition aminopyralid and quinmerac, or an ester or salt of any of the foregoing, and/or a combination thereof; and an agriculturally acceptable carrier.

In yet another embodiment, the composition comprises at least one additional component selected from the group of surfactants, solid diluents and liquid diluents.

The present composition can be made at the time of use or diluted. The present compositions can also be concentrated compositions, or so-called "ready-to-use" compositions, that is to say, compositions ready for use. Alternatively, the present compositions may be applied in a combined spray mixture composed from separate formulations of the single active ingredients, such as a "tank-mix" form.

In yet another embodiment, the herbicidal composition may be applied in the form of a ready-for-use formulation comprising aminopyralid and quinmerac. This formulation can be obtained by combining aminopyralid and quinmerac in a herbicidally effective amount with an agriculturally acceptable carrier, a surfactant or other application-promoting adjuvant customarily employed in formulation technology.

The present composition may be employed or prepared in any conventional form, for example, in the form of a twin pack, or for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

According to an embodiment, the composition comprises at least one additional component selected from the group of surfactants, solid diluents and liquid diluents.

Such compositions can be formulated using agriculturally acceptable carriers, surfactants or other application-promoting adjuvants customarily employed in formulation technology and formulation techniques that are known in the art.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, solvent or oil, which are suitable for dilution with water.

In an embodiment, the amount of the mixture of active ingredients in the composition is about 0.1-99 wt. %, about 0.1-95 wt. %, or about 0.1-90 wt. %, based on the total weight of the composition. In another embodiment, the amount of the mixture of active ingredients in the composition is about 1-70 wt. %, based on the total weight of the composition. In yet another embodiment, the amount of the mixture of active ingredients in the composition is about 1-50 wt. %, based on the total weight of the composition. In yet another embodiment, the amount of the mixture of active ingredients in the composition is about 1-40 wt. %, based on the total weight of the composition. In yet another embodiment, the amount of the mixture of active ingredients in the composition is about 1-30 wt. %, based on the total weight of the composition. In yet another embodiment, the amount of the mixture of active ingredients in the composition is about 1-20 wt. %, based on the total weight of the composition. In yet another embodiment, the amount of the mixture of active ingredients in the composition is about 1-10 wt. %, based on the total weight of the composition. The remaining components in the formulation are for example the carrier and additives.

In yet another embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In another embodiment, the combined amount of aminopyralid and quinmerac together in the ready-to-use formulations is 1-95 wt. %, particularly 75-95 wt. %, based on the total weight of the formulation.

For example, the combined amount of aminopyralid and quinmerac in the ready-to-use formulations according to the invention is 0.01-95 wt.%, particularly 0.1-90 wt. %, more particularly 1-90 wt. %, even more particularly is 10-90 wt. %, based on the total weight of the formulation.

The present composition may include additional crop protection agents, for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the desired control of undesired vegetation as achieved by the present combinations. Accordingly, the present herbicidal compositions and herbicidal mixtures may be limited to containing aminopyralid and quinmerac, as the only crop protection agents and/or herbicides present.

Without departing from the scope of the subject matter, the mixture and formulations of the present subject matter may be applied in conjunction with one or more co-herbicides to control a wider variety of undesirable vegetation. When used in conjunction with co-herbicides, the composition can be formulated with the co-herbicide or co-herbicides, tank mixed with the co-herbicide or co-herbicides or applied sequentially with the co-herbicide or co-herbicides. Some of the co-herbicides that can be employed in conjunction with the mixture of the present subject matter include but are not limited to 4-CPA; 4-CPB; 4-CPP; 2,4-D; 2,4-D choline salt, 2,4-D esters and amines, 2,4-DB; 3,4-DA; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bialaphos, bicyclopyrone, bifenox, bilanafos, bispyribac-sodium, borax, bromacil, bromobonil, bromobutide, bromofenoxim, bromoxynil, brompyrazon, butachlor, butafenacil, butenachlor, buthidazole, buthiuron, butroxydim, buturon, butylate, cacodylic acid, cafenstrole, calcium chlorate, calcium cyanamide, cambendichlor, carbasulam, carboxazole chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimexano, dimidazon, dinofenate, dinoprop, dinosam, dinoseb, dinoterb, diphenamid, dipropetryn, diquat, disuldiuron, DMPA, DNOC, DSMA, EBEP, eglinazine, endothal, epronaz, EPTC, erbon, esprocarb, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl+isoxadifen-ethyl, fenoxasulfone, fenteracol, fenthiaprop, fentrazamide, fenuron, ferrous sulfate, flamprop, flamprop-M, flazasulfuron, florasulam, fluazifop, fluazifop-P-butyl, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, fluorochloridone, fluoroxypyr, fluoroxypyr-meptyl, flurtamone, fluthiacet, fomesafen, foramsulfuron, fosamine, fumiclorac, furyloxyfen, glufosinate, glufosinate salts and esters, glufosinate-ammonium, glufosinate-P-ammonium, glyphosate, glyphosate salts and esters, halauxifen, halauxifen-methyl, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazosulfuron, imazethapyr, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazosulfuron, metflurazon, methabenzthiazuron, methalpropalin, methazole, methiobencarb, methiozolin, methiuron, methometon, methoprotryne, methyl bromide, methyl isothiocyanate, metazachlor, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, ortho-dichlorobenzene, orthosulfamuron, oxadiargyl, oxadiazon, oxapyrazon, oxasulfuron, oxaziclomefone, oxyfluorfen, paraflufen-ethyl, parafluoron, paraquat, pebulate, pelargonic acidpenoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, SYN-523, TCA, tebutam, tebuthiuron, tefuryltrione, tembotrione, tepraloxydim, terbacil, terbucarb, terbuchlor, terbumeton, terbuthylazine, terbutryn, tetrafluoron, thiazafluoronthidiazimin, thidiazuron, thiencarbazone-methyl, thifensulfuron, thifensulfurn-methyl, thiobencarb, tiocarbazil, tioclorim, topramezone, tralkoxydim, triafamone, triallate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifop, trifopsime, trihydroxytriazine, trimeturon, tripropindan, tritac tritosulfuron, vernolate, xylachlor and salts, esters, optically active isomers and mixtures thereof.

The mixture and formulations of the present subject matter may also comprise one or more herbicide safeners. Herbicide safeners are chemical compounds used in combination with herbicides to make them "safer" - that is, to reduce the effect of the herbicide on crop plants, and to improve selectivity between crop plants vs. weed species being targeted by the herbicide. Some safeners are themselves herbicidally active. In these cases, the safeners act as antidote or antagonist in the crop plants and thus reduce or even prevent damage to the crop plants.

Additionally, the present subject matter provides a method of controlling undesired vegetation comprising applying to a locus of the undesired vegetation a herbicidally effective amount of a mixture of aminopyralid and quinmerac, or an ester or salt of any of the foregoing, and/or a combination thereof.

The herbicidally effective application rates of the herbicidal mixture cannot generally be defined, as it varies depending upon various conditions such as the type of the formulation, weather conditions, density of the undesired vegetation, the development stage of the plants, the type of crop and the type of weeds. In an embodiment, the herbicidal mixture may be applied to the locus of undesired vegetation in an amount of from about 1 to 5000 g/ha. In a further embodiment, the herbicidal mixture may be applied in an amount of from about 100 to 1000 g/ha. In yet another embodiment, the herbicidal mixture may be applied in an amount of from about 100 to 800 g/ha. In yet another embodiment, the application rates of the herbicidal mixture are from about 100 g/ha to 500 g/ha. In yet another embodiment, the application rates of the herbicidal mixture are from about 100 g/ha to 400 g/ha. In yet another embodiment, the application rates of the herbicidal mixture are from about 150 g/ha to 250 g/ha. The above ranges refer to the application rates of a combination of aminopyralid and quinmerac (namely a sum of the application rate of all active ingredients).

Correspondingly, the application rates for aminopyralid are generally from 1 to 1000 g/ha, preferably from 1 to 100 g/ha, in particular from 1 to 50 g/ha. In an example, the application rates aminopyralid may be from 1 to 25 g/ha.

Correspondingly, the application rates for quinmerac are generally from 1 to 2000 g/ha, preferably from 1 to 1000 g/ha, in particular from 100 to 1000 g/ha. In an example, the application rates of quinmerac may be from 100 to 700 g/ha.

In some embodiments, aminopyralid may be applied at a rate of about 1 g/ha to 50 g/ha and quinmerac may be applied at a rate of about 100 g/ha to 1000 g/ha. In some embodiments, aminopyralid may be applied at a rate of about 1 g/ha to 25 g/ha and quinmerac may be applied at a rate of about 100 g/ha to 700 g/ha. In some embodiments, aminopyralid may be applied at a rate of about 1 g/ha to 10 g/ha and quinmerac may be applied at a rate of about 150 g/ha to 250 g/ha.

As used in the present methods, the herbicidal compositions and herbicidal mixtures discussed herein may be applied jointly or in a succession. That is, each of aminopyralid and quinmerac may be applied jointly or in succession. In one example, aminopyralid and quinmerac are prepared separately, and the individual formulations are applied as is, or diluted to predetermined concentrations. In a further example, aminopyralid and quinmerac are prepared separately, and the formulations are mixed when diluted to a predetermined concentration. In another example, aminopyralid and quinmerac are formulated together, and the formulation is applied as it is, or the formulation is diluted to a predetermined concentration.

The herbicidal mixture may be applied to undesired vegetation or may be applied to the locus of the undesired vegetation. Further, it may be applied pre-emergence, or early-post-emergence. The herbicidal mixture may be applied via foliar application, broadcast, basal application, soil application, soil incorporation or soil injection.

The mixtures and the herbicidal compositions can be applied pre-plant incorporated, pre- or post-emergence.

In an embodiment, the mixture is applied to undesired vegetation in crops which include but is not limited to one or more of cereals such as: wheat, barley, oats, winter wheat, spring wheat, winter barley, spring barley, triticale, cereal rye, winter durum wheat, spring durum wheat, winter oat, spring oat, fodder cereals; maize, canola, oil seed rape and sugarbeet.

In a further embodiment, the mixture is applied in non-crop areas which include but are not limited to, turfgrass, pastures, grasslands, rangelands, fallow land, rights-of-way, golf courses, parks, along roadsides, power-lines, pipelines, railways, forests, well sites, and equipment yards.

In still another embodiment, the plants include cultivated plants which tolerate the action of herbicides, fungicides or insecticides as a result of breeding and/or genetically engineered methods.

In yet another embodiment, the undesired vegetation may be monocotyledonous or dicotyledonous weeds may include one or more of *Alopecurus myosuroides, Amaranthus retroflexus, Anthemis arvensis, Apera spica-venti, Capsella bursa-pastoris, Centaurea cyanus, Chenopodium album, Descurainia sophia, Erodium cicutarium, Fumaria officinalis, Galium aparine, Geranium dissectum, Germanium pusillum, Geranium rotundifolium, Geranium* spp., *Hordeum vulgare, Lamium amplexicaule, Lamium purpureum, Lolium multiflorum, Lolium perenne, Matricaria chamomilla, Matricaria inodora, Matricaria recutita, Myosotis arvensis, Papaver rhoeas, Polygonum convolvulus, Raphanus raphanistrum, Senecio vulgaris, Sinapis alba, Sinapis arvensis, Sisymbrium officinale, Sonchus arvensis, Stellaria media, Thlaspi arvense, Triticum aestivum, Aethusa cynapium, Mercurialis annua, Triticum durum, Veronica hederaefolia, Veronica persica, Veronica* spp., and *Viola arvensis.*

Application of the inventive compositions to plants may also lead to an increase in the crop yield.

In another embodiment, the present subject matter provides a kit comprising the herbicidal mixture as described herein, or components thereof. Such kits may comprise, in addition to the aforementioned active components, one or more additional active and/or inactive ingredients, either within the provided herbicidal composition or separately. Certain kits comprise aminopyralid and quinmerac, or an ester or salt of any of the foregoing, and/or a combination thereof, each in a separate container, and each optionally combined with a carrier.

As noted above, the herbicidal compositions, kits and methods described herein may exhibit a synergistic effect. The herbicidal compositions, kits and methods described herein, can broaden the spectrum of control, and/or minimize the dosages being used when compared to the use of such individual pesticides alone. The instructions may be in the form of printed matter, for example either as inserts or labels.

The following examples illustrate the practice of the present invention in some of its embodiments but should not be construed as limiting the scope of the invention. Other embodiments will be apparent to one skilled in the art from consideration of the specification and examples. It is intended that the specification, including the examples, is considered exemplary only without limiting the scope and spirit of the invention.

A synergistic effect exists wherever the action of a combination of active components is greater than the sum of the action of each of the components alone. Therefore, a synergistically effective amount (or an effective amount of a synergistic composition or combination) as discussed herein is an amount that exhibits greater pesticidal activity than the sum of the pesticidal activities of the individual components.

In the context of the present subject matter, the term "synergy" is as defined by Colby S. R. in an article entitled "Calculation of the synergistic and antagonistic responses of herbicide combinations" published in the journal Weeds, 1967, 15, p. 20-22, incorporated herein by reference in its entirety. The action expected for a given combination of three active components can be calculated as follows:

$$E = X + Y - \frac{XY}{100}$$

in which E represents the expected percentage of pesticidal control for the combination of the three pesticides at defined doses (for example equal to x, y and z respectively), X is the percentage of herbicidal control observed by aminopyralid at a defined dose (equal to x), and Y is the percentage of herbicidal control observed by quinmerac at a defined dose (equal to y), When the percentage of herbicidal control observed for the combination is greater than the expected percentage, there is a synergistic effect.

When the percentage of control observed for the combination is equal to the expected percentage, there is an additive effect and wherein the percentage of herbicidal control observed for the combination is lower than the expected percentage, there is an antagonistic effect.

EXAMPLES

An experiment was conducted to evaluate the herbicidal control of a number of different weeds in a crop of winter oil seed rape with aminopyralid and quinmerac, alone, and in formulations comprising both aminopyralid and quinmerac.

The experiments were conducted by applying compositions of aminopyralid (aminopyralid 30 SL) alone and quinmerac (quinmerac 250 SC) alone. The efficacy of these applications were compared with the efficacy of a composition comprising both aminopyralid and quinmerac (15g/L aminopyralid and quinmerac 470 g/L). The compositions were diluted with water to the stated concentration of the active compound.

The following active ingredients and their mixtures were evaluated:

- Aminopyralid 6 gr (A.I.)/ha

- Quinmerac 250 gr (A.I.)/ha

- Aminopyralid + Quinmerac 6 gr (A.I.)/ha + 188 gr (A.I.)/ha

As can be seen, the amount of quinmerac applied in the formulation is significantly less than the amount of quinmerac applied alone (25% less quinmerac).

Table 1 - % Efficacy (Pre-Emergence Weeds)

| A.I. | Weed | Application rate (gr a.i/ha) | % control observed |
|---|---|---|---|
| Aminopyralid 30 SL | *Anthemis arvensis* | 6 | 77.5 |
| Quinmerac 250 SC | | 250 | 56.25 |
| Aminopyralid and Quinmerac SC 15 +470 g/L | | 6+188 | 90.38 |
| Aminopyralid 30 SL | *Lamium purpureum* | 6 | 90.25 |
| Quinmerac 250 SC | | 250 | 84.5 |
| Aminopyralid and Quinmerac SC 15 +470 g/L | | 6+188 | 94.5 |
| Aminopyralid 30 SL | *Thlaspi arvense* | 6 | 84.40 |
| Quinmerac 250 SC | | 250 | 86.20 |
| Aminopyralid and Quinmerac SC 15 +470 g/L | | 6+188 | 99.20 |
| Aminopyralid 30 SL | *Aethusa cynapium* | 6 | 60 |
| Quinmerac 250 SC | | 250 | 70 |
| Aminopyralid and Quinmerac SC 15 +470 g/L | | 6+188 | 85 |
| Aminopyralid 30 SL | *Mercurialis annua* | 6 | 89 |
| Quinmerac 250 SC | | 250 | 71.8 |
| Aminopyralid and Quinmerac SC 15 +470 g/L | | 6+188 | 94.3 |

**Table 2 - % Efficacy (Post-Emergence Weeds)**

| A.I. | Weed | Application rate (gr a.i/ha) | % control observed |
|---|---|---|---|
| Aminopyralid 30 SL | *Anthemis arvensis* | 6 | 78.5 |
| Quinmerac 250 SC | | 250 | 48.75 |
| Aminopyralid and Quinmerac SC 15 +470 g/L | | 6+188 | 91.25 |

(continued)

| A.I. | Weed | Application rate (gr a.i/ha) | % control observed |
|---|---|---|---|
| Aminopyralid 30 SL | *Galium aparine* | 6 | 93 |
| Quinmerac 250 SC | | 250 | 94.75 |
| Aminopyralid and Quinmerac SC 15 +470 g/L | | 6+188 | 95 |
| Aminopyralid 30 SL | *Matricaria* | 6 | 87.625 |
| Quinmerac 250 SC | | 250 | 69.75 |
| Aminopyralid and Quinmerac SC 15 +470 g/L | | 6+188 | 92.5 |
| Aminopyralid 30 SL | *Viola arvensis* | 6 | 90 |
| Quinmerac 250 SC | | 250 | 81.25 |
| Aminopyralid and Quinmerac SC 15 +470 g/L | | 6+188 | 93.5 |
| Aminopyralid 30 SL | *Sisymbrium officinale* | 6 | 35 |
| Quinmerac 250 SC | | 250 | 5 |
| Aminopyralid and Quinmerac SC 15 +470 g/L | | 6+188 | 58.3 |

As can been seen in Tables 1-2, that although the formulation comprising the combination of aminopyralid and quinmerac comprises about 25% less quinmerac than quinmerac applied alone, the formulation provided the same if not better results with respect to the efficacy of the herbicides when compared with aminopyralid and quinmerac individually. It should be noted, that from the above table it can be seen that the formulation of aminopyralid and quinmerac provides control on a broader spectrum of weeds. This includes pre-emergence weeds as well as post-emergence weeds. In other words, the combination of aminopyralid and quinmerac provides control of weeds that are not sufficiently controlled by at least one of aminopyralid and quinmerac individually. Further, when combining aminopyralid and quinmerac lower rates of each of the herbicides may be applied while providing the same amount if not better control than the recommended rates of aminopyralid and quinmerac. Although only a small number of weeds are shown in the above tables, it can be appreciated that similar efficacy results may be obtained when a mixture comprising aminopyralid and quinmerac is applied to different pre-emergent and post-emergent weeds.

It can also be expected that the herbicidal mixture comprising aminopyralid and quinmerac at different ratios is expected to show synergistic effect against a wide variety of weeds.

While the present subject matter has been shown and described with reference to preferred embodiments thereof, it will be understood by those skilled in the art that many alternatives, modifications and variations may be made thereto without departing from the spirit and scope thereof. Accordingly, it is intended to embrace all such alternatives, modifications, and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference.

In addition, any priority document(s) of this application is/are hereby incorporated herein by reference in its/their entirety.

The present invention is further defined by the following items:

1. A herbicidal mixture comprising aminopyralid and quinmerac, or an ester or salt of any of the foregoing, or a combination thereof.

2. The herbicidal mixture of item 1, wherein the weight ratio of aminopyralid to quinmerac is from 1:0.1 to 1:100.

3. The herbicidal mixture of item 2, wherein the weight ratio of aminopyralid to quinmerac is from 1:5 to 1:50.

4. The herbicidal mixture of any one of items 1-3, wherein aminopyralid and quinmerac are applied jointly or in succession.

5. The herbicidal mixture of any one of items 1-4, wherein said mixture is used to provide a rate of application of from 1 to 1000 g/ha.

6. The herbicidal mixture of item 5, wherein said mixture is used to provide a rate of application of 100 to 800 g/ha.

7. The herbicidal mixture of any one of items 1-6, wherein the mixture provides a synergistic effect.

8. A composition comprising a mixture of aminopyralid and quinmerac, or an ester or salt of any of the foregoing, or a combination thereof.

9. The composition of item 8, characterized in that it further comprises an agriculturally acceptable carrier.

10. The composition of item 8 or 9, further comprising at least one surfactant, solid diluent, liquid diluent, or a combination thereof.

11. The composition of any one of items 8-10, wherein the weight ratio of aminopyralid to quinmerac is from 1:0.1 to 1:100.

12. The composition of item 11, wherein the weight ratio of aminopyralid to quinmerac is 1:5 to 1:50.

13. The composition of any one of items 8-12, wherein aminopyralid and quinmerac are applied jointly or in succession.

14. The composition of any one of items 8-13, wherein said mixture is used to provide a rate of application of from 1 to 1000 g/ha.

15. The composition mixture of item 14, wherein said mixture is used to provide a rate of application of 100 to 800 g/ha.

16. The composition of any one of items 8-15, wherein the mixture provides a synergistic effect.

17. A method of controlling undesired vegetation comprising applying to a locus of the undesired vegetation a herbicidally effective amount of a mixture comprising aminopyralid and quinmerac, or an ester or salt of any of the foregoing, or a combination thereof.

18. The method of item 17, wherein the weight ratio of aminopyralid to quinmerac is from 1:0.1 to 1:100.

19. The method of item 18, wherein the weight ratio of aminopyralid to quinmerac is 1:5 to 1:50.

20. The method of any one of items 17-19, wherein aminopyralid and quinmerac are applied jointly or in succession.

21. The method of any one of items 17-20, wherein said mixture is used to provide a rate of application of from 1 to 1000 g/ha.

22. The method of item 21, wherein said mixture is used to provide a rate of application of 1 to 500 g/ha.

23. The method of any one of items 17-22, wherein the mixture provides a synergistic effect.

24. The method of any one of items 17-23 for the control of an undesired vegetation in a crop, said crop being at least one of a cereal, canola, oil seed rape and sugarbeet.

25. The method of any one of items 17-24, wherein the mixture is applied pre-emergence, or early-post-emergence to the locus of the undesired vegetation or the area under cultivation.

26. The method of any one of items 17-25, wherein the undesired vegetation is selected from the group comprising monocotyledonous weed and dicotyledonous weed.

27. A method of controlling undesired vegetation comprising applying to a locus of the undesired vegetation the composition of any one of items 8-16.

28. The method of item 27, for the control of an undesired vegetation in a crop, said crop being at least one of a cereal, canola, oil seed rape and sugarbeet.

29. The method of item 27 or 28, wherein the mixture is applied pre-emergence, or early-post-emergence to the locus of the undesired vegetation or the area under cultivation.

30. The method of any one of items 27-29, wherein the undesired vegetation is selected from the group comprising monocotyledonous weed and dicotyledonous weed.

31. A kit comprising the herbicidal mixture according to any one of items 1-7.

32. A kit comprising the composition according to any one of items 8-16.

**Claims**

1. A method for the herbicidal control of a number of different weeds in a rape crop such as winter oil seed rape, with aminopyralid and quinmerac in a formulation comprising both aminopyralid and quinmerac, the method comprising applying a composition comprising both aminopyralid and quinmerac at a ratio of about 1:31 comprising 15g of aminopyralid for each 470g quinmerac, diluted in water, at an application rate such that about 6g of Aminopyralid and about 188g of Quinmerac are applied per hectare (about 6 gr (A.I.)/ha + about 188 gr (A.I.)/ha), of pre-emergence weeds or post-emergence weeds selected from *Anthemis arvensis; Galium aparine; Matricaria; Viola arvensis; Sisymbrium officinale; Lamium purpureum; Thlaspi arvense; Aethusa cynapium;* and *Mercurialis annua.*

2. A method for the herbicidal control of a weeds in a winter oil seed rape crop, with aminopyralid and quinmerac in a formulation comprising both aminopyralid and quinmerac, the method comprising,

   a. obtaining a composition comprising both aminopyralid and quinmerac such that the composition comprises about 15g of aminopyralid for each 470g of quinmerac,
   b. diluting the obtained composition with water, and
   c. applying the composition comprising both aminopyralid and quinmerac at a rate of about 6gr a.i./ha Aminopyralid and about 188 gr a.i./ha Quinmerac gr (A.I.)/ha), to pre-emergence weeds and/or post-emergence weeds in the winter oil seed rape crop.

3. The method of either claim 1 or claim 2 wherein the composition also comprises one or more herbicide safeners and/or the composition is applied in conjunction with one or more co-herbicides, and wherein the composition,

   a. comprises, at least one additional component selected from the group of surfactants, solid diluents and liquid diluents,
   b. is formulated using agriculturally acceptable carriers, surfactants or other application-promoting adjuvants, and/or
   c. comprises other ingredients, such as wetting agents, anti-foaming, adhesives, neutralizers, thickeners, binders, sequestrates, fertilizers, biocides, stabilizers, buffers or anti-freeze agents.

4. The method of any one of claims 1 - 3 wherein the composition comprises liquid carrier selected from the group of, water; aromatic hydrocarbons such as alkylbenzenes and alkyl naphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone.

5. The method of any one of claims 1 - 4 wherein the composition comprises surfactant selected from, alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styryl phenol ethoxylates, condensates of sulfonated naphthalene and naphthalene derivatives with formaldehyde, condensates of naphthalene or of naphthalenesulfonic acid with phenol and formaldehyde, alkyl aryl sulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers.

6. The method of any one of claims 1-5 comprising applying a diluted composition comprising both aminopyralid and quinmerac at a ratio of about 1: 31 in a rape crop such as winter oil seed rape at a rate to deliver about 6g a.i./ha aminopyralid and about 188g a.i./ha quinmerac to pre-emergence weeds and post-emergence weeds, selected from the group consisting of selected from *Anthemis arvensis; Galium aparine; Matricaria; Viola arvensis; Sisymbrium officinale; Lamium purpureum; Thlaspi arvense; Aethusa cynapium;* and *Mercurialis annua* and mixtures thereof.

7. The method of any one of claims 1-6, wherein the diluted composition contains a concentrated composition comprising Aminopyralid 15g/L and Quinmerac 470g/L, diluted with water as an aqueous use form such that the amount of the mixture of active ingredients in the diluted composition is 0.1% (0.1g/L), 0.5% (0.5g/L), 1% (1g/L), 1.5% (1.5g/L), 2% (2g/L), 2.5%(2.5g/L), 3% (3g/L), 3.5% (3.5g/L), 4% (4g/L), 4.5%(4.5g/L), or 5% (5g/L), of the aqueous use form such that the amount of diluted composition applied per hectare is about 1940L, about 388L, about 194L, about 129L, about 97L, about 77.6L, about 64.7L, about 55.4L, about 48.5L, about 43.1L, and about 38.8L respectively, to apply to deliver about 6g a.i./ha Aminopyralid and about 188g a.i./ha Quinmerac.

8. The method of any one of claims 1-7, wherein the diluted composition contains aminopyralid and quinmerac at a ratio of about 1:31, diluted in water.

9. The method of any one of claims 1-8 wherein, the pre-emergence weeds are selected from Anthemis arvensis; Lamium purpureum; Thlaspi arvense; Aethusa cynapium; and Mercurialis annua; and/or wherein the post-emergence weeds are selected from Anthemis arvensis; Galium aparine; Matricaria; Viola arvensis; Sisymbrium officinale.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62899753
- WO 2001051468 A
- EP 104389 A

**Non-patent literature cited in the description**

- *Int. J. Agri. Biol.*, 2004, vol. 6 (1), 209-212
- **L. A. BRINKWORTH et al.** *Proc. BCPC Int. Congr., Glasgow*, 2005, vol. 1, 43
- **B. WUERZER et al.** *Proc. Br. Crop Prot. Conf. - Weeds*, 1985, vol. 1, 63
- **K. GROSSMANN** ; **F. SCHELTRUP**. *Proc. Br. Crop Prot. Conf. - Weeds*, 1995, vol. 1, 393
- **COLBY S. R.** Calculation of the synergistic and antagonistic responses of herbicide combinations. *Weeds*, 1967, vol. 15, 20-22